# FASCICULE DE BREVET EUROPEEN

(11) **EP 4 164 097 B1**
(45) Date de publication et mention de la délivrance du brevet: **19.02.2025**
(21) Numéro de dépôt: 22200786.6
(22) Date de dépôt: 11.10.2022
(51) Int. Cl.: H02K 17/16, H02K 15/00

(54) **PROCÉDÉ DE FABRICATION D'UN ANNEAU DE COURT-CIRCUIT POUR UN MOTEUR ÉLECTRIQUE**
VERFAHREN ZUR HERSTELLUNG EINES KURZSCHLUSSRINGS EINER ELEKTROMOTOR
METHOD FOR MANUFACTURING A SHORT-CIRCUIT RING FOR AN ELECTRIC MOTOR

(30) Priorité: 11.10.2021 FR 2110720
(43) Date de publication de la demande: 12.04.2023
(73) Titulaire: ALSTOM Holdings, 93400 Saint-Ouen-sur-Seine (FR)
(72) Inventeur: ROBBE, Gilles, 25660 MONTFAUCON (FR); RACLOT, Jean-Philippe, 25000 BESANCON (FR)
(74) Mandataire: Lavoix

(56) Documents cités:
- DE-A1- 102013 202 557
- US-A1- 2013 127 291
- US-A1- 2014 339 950
- US-A1- 2021 083 561

## Description

La présente invention concerne un procédé de fabrication d'un anneau de court-circuit pour un moteur électrique.

Les moteurs à induction électromagnétique, et en particulier les moteurs asynchrones du type à cage d'écureuil, comportent essentiellement un élément statique ou stator, et un élément rotatif, c'est-à-dire un rotor qui est monté à l'intérieur du stator sur un arbre moteur rotatif.

Plus en détail, le rotor comporte normalement une pluralité de barres longitudinales, réalisées à partir d'un matériau électriquement conducteur, et une pile de tôles magnétiques, réalisées par exemple en acier laminé, qui sont assemblées sur l'arbre rotatif et présentent une pluralité de rainures longitudinales ; les barres conductrices du rotor sont logées dans les rainures et sont couplés à leurs extrémités à deux anneaux de court-circuit en réalisant configuration en cage d'écureuil.

Les solutions utilisées actuellement pour coupler les anneaux de court-circuit aux barres conductrices présentent des inconvénients et sont susceptibles d'améliorations.

En particulier, selon une première solution, l'extrémité de chaque barre rotorique est logée dans une rainure circulaire usinée dans l'anneau de court-circuit, et sa surface d'extrémité est en appui contre la face de la rainure ; les deux parties sont ensuite brasées, en utilisant un matériau d'apport qui est inséré dans la rainure en regard de la zone de jonction.

La brasure remplit l'interstice entre deux barres adjacentes, mais cette disposition nécessite un volume important de brasure pour combler le volume ouvert.

Une autre solution connue dans l'état de l'art utilise des cales qui sont placées dans la rainure de l'anneau de court-circuit et sont interposées entre deux barres adjacentes.

Cette solution permet de réduire le volume de brasure pour réaliser la liaison, mais elle demande des précautions supplémentaires pour le positionnement des cales au moment du brasage. En effet, un positionnement imparfait des cales peut amener des problèmes de qualité conduisant, par exemple, à une fissuration de la liaison entre la barre et l'anneau et ensuite à la défaillance de la liaison en service.

En outre, les dispositions constructives actuelles pour l'assemblage des anneaux de court-circuit avec les barres rotoriques imposent une limite en termes de vitesse linéaire périphérique du rotor, par exemple de l'ordre 100m/s.

Le document DE 10 2013 202557 A1 divulgue une cage d'écureuil pour un rotor, comportant une pluralité de barres qui s'étendent dans une direction axiale. Deux anneaux de cage d'écureuil sont agencés aux extrémités opposées de la pluralité de barres. Chaque anneau comporte un disque de connexion et un disque de court-circuit. Le disque de connexion comporte une pluralité d'évidements, dans chacun desquels une barre de cage est agencée, de sorte que la pluralité de barres de cage est fixée mécaniquement par rapport au disque de connexion. Le disque de court-circuit repose directement contre le disque de connexion dans la direction axiale.

Le document US 2013/127291 A1 divulgue un procédé de formation d'un rotor qui comprend une pluralité de barres conductrices reliées à deux anneaux de court-circuit qui se développent autour d'un axe longitudinal. Chaque anneau de court-circuit comporte une face de couplage qui s'étend en direction transversale par rapport à l'axe longitudinale et comporte une pluralité de cavités. Les extrémités de chaque barre sont logées dans deux cavités correspondantes, et chaque cavité comporte une paroi de fond fermée et transversale à l'axe longitudinal de façon à loger, de manière non traversante, une extrémité d'une barre. Des éléments de remplissage s'étendent chacun en saillie entre deux cavités adjacentes.

Le document US 2021/083561 A1 divulgue une cage d'écureuil d'une machine tournante dynamoélectrique, qui comprend deux anneaux de court-circuit assemblés avec un rotor ayant une pluralité de barres conductrices. Chaque anneau comporte une pluralité de niches. Une protubérance est prévue dans chaque niche. Pendant l'assemblage, les extrémités de chaque barre sont insérées dans deux niches correspondantes, ensuite chaque barre est comprimée par une force de compression appliquée à l'anneau de court-circuit, et chaque protubérance perce dans une extrémité de la barre de cage.

Le document US 2014/339950 A1 divulgue un ensemble de rotor ayant un corps central et une pluralité de barres conductrices. A chaque extrémité de l'ensemble central se trouve un disque d'extrémité correspondant. Chaque disque comprend une pluralité de fentes ou cavités. Pendant l'assemblage, les extrémités de chaque barre sont insérées à pression dans deux fentes et, ensuite, les barres sont soudées aux disques.

Par conséquent, un but principal de la présente invention est de fournir une solution offrant des améliorations par rapport à l'état de l'art connu, et spécialement de réaliser des anneaux de court-circuit qui permettent de rendre la jonction avec les barres rotoriques plus fiable et plus simple à réaliser, avec une capacité mécanique supérieure de reprise des efforts centrifuges autorisant des vitesses linéaires périphériques supérieure pour les moteurs.

Ce but est atteint par un procédé de fabrication d'un anneau de court-circuit pour un moteur électrique qui comprend un rotor incluant une pluralité de barres rotoriques, le procédé de fabrication comportant au moins les étapes suivantes:
- (a) : réaliser un corps de forme substantiellement annulaire en une seule pièce de matériau électriquement conducteur, qui se développe autour d'un axe de référence et comporte une face de couplage avec les barres rotoriques qui se développe transversalement par rapport à l'axe longitudinal de référence ;
- (b) : réaliser, sur la face de couplage du corps annulaire une pluralité de niches de logement qui sont espacées à distance régulière les unes des autres selon une direction circonférentielle le long de la face de couplage, chaque niche de logement s'étendant selon une direction substantiellement parallèle à l'axe longitudinal de référence et ayant une paroi de fond fermée transversale à l'axe longitudinal de référence de façon à loger, de manière non traversante, une portion d'extrémité d'une barre rotorique, et une pluralité d'éléments de remplissage, chaque élément de remplissage s'étendant entre deux niches de logements adjacentes, en saillie par rapport aux parois de fond fermées correspondantes et étant configuré pour remplir, au moins partiellement, un espace entre les portions d'extrémité de deux barres rotoriques adjacentes une fois que les barres rotoriques sont logées dans les niches de logement correspondantes, le procédé de fabrication étant caractérisé en ce que l'étape consistant à réaliser la pluralité d'éléments de remplissage et la pluralité de niches de logement comprend les sous-étapes suivantes :
- (c) fraiser le corps annulaire en formant les niches de logement creusées dans le corps annulaire à distance régulière les unes des autres et s'étendant de la face de couplage vers l'intérieur du corps annulaire en direction substantiellement parallèle à l'axe de référence, les portions de la face de couplage pleines ou non fraisées entre chaque couple de niches de logement adjacentes formant la pluralité d'éléments de remplissage ;
- réaliser, selon une direction circonférentielle le long d'un bord interne et d'un bord externe de la face de couplage une première rainure et une deuxième rainure correspondante ;
- fraiser radialement, à des positions prédéfinies, des portions de la face de couplage entre la première rainure et la deuxième rainure, afin de former la pluralité des niches de logements alternées en séquence avec des portions de la face de couplage pleines on non fraisées, chaque portion pleine ou non fraisée entre chaque couple de niches de logement adjacentes formant un élément de remplissage correspondant.

D'autres aspects et avantages de l'invention apparaîtront à la lecture de la description qui suit, donnée uniquement à titre d'exemple et faite en référence aux dessins annexés, parmi lesquels :
[FIG. 1] la Figure 1 est une coupe longitudinale illustrant schématiquement un exemple d'un moteur électrique asynchrone de traction ferroviaire équipé avec deux anneaux de court-circuit ;
[FIG. 2] la Figure 2 illustre schématiquement une portion d'un anneau de court-circuit selon une forme possible de réalisation ;
[FIG. 3] la Figure 3 est une vue de face illustrant schématiquement l'anneau de court-circuit de la figure 2 couplé à des barres conductrices du moteur électrique de la figure 1, vu du côté des barres conductrices ;
[FIG. 4] la Figure 4 illustre schématiquement une portion d'un anneau de court-circuit selon une autre forme possible de réalisation ;
[FIG. 5] la Figure 5 est une vue de face illustrant schématiquement l'anneau de court-circuit de la figure 4 couplé à des barres conductrices du moteur électrique de la figure 1, vu du côté des barres conductrices ;
[FIG. 6] la Figure 6 est une vue en coupe selon le plan A-A illustrant schématiquement une portion rectifié d'un anneau de court-circuit illustré sur la figure 2 ou sur la figure 4 ;
[FIG. 7] la Figure 7 est un schéma blocs représentant schématiquement un procédé de fabrication d'un anneau de court-circuit pour un moteur électrique, selon l'invention ;
[FIG. 8] la Figure 8 est un schéma blocs représentant schématiquement un procédé d'assemblage d'un anneau de court-circuit à un rotor d'un moteur électrique ayant une pluralité de barres rotoriques, qui n'est pas couvert par la revendication attachée.

Il est à noter que dans la description détaillée qui suit, les composants identiques ou similaires, du point de vue structurel et/ou fonctionnel, portent les mêmes références numériques, qu'ils soient représentés ou non dans des modes de réalisation différents de la présente description.

Il convient également de noter que, pour décrire de manière claire et concise la présente invention, les dessins ne sont pas nécessairement à l'échelle et que certaines caractéristiques peuvent être présentées sous une forme schématique.

En outre, lorsque le terme "adapté" ou "agencé" ou "configuré" ou un terme similaire est utilisé ici en se référant à tout composant dans son ensemble, ou à toute partie d'un composant, ou à une combinaison de composants, il doit être compris que cela signifie et englobe la structure et/ou la configuration et/ou la forme et/ou le positionnement du composant ou de la partie que ce terme désigne.

En outre, lorsque les termes "substantiellement" ou "sensiblement" sont utilisés ici, ils doivent être compris comme englobant une possible variation de plus ou moins 5% par rapport à une valeur ou une position de référence indiquée ; de plus, lorsque les termes transversal ou transversalement sont utilisés ici, ils doivent être compris comme englobant une direction non parallèle à la ou aux pièces ou direction(s) / axe(s) de référence auxquels ils se réfèrent, et la perpendicularité doit être considérée comme un cas spécifique de direction transversale.

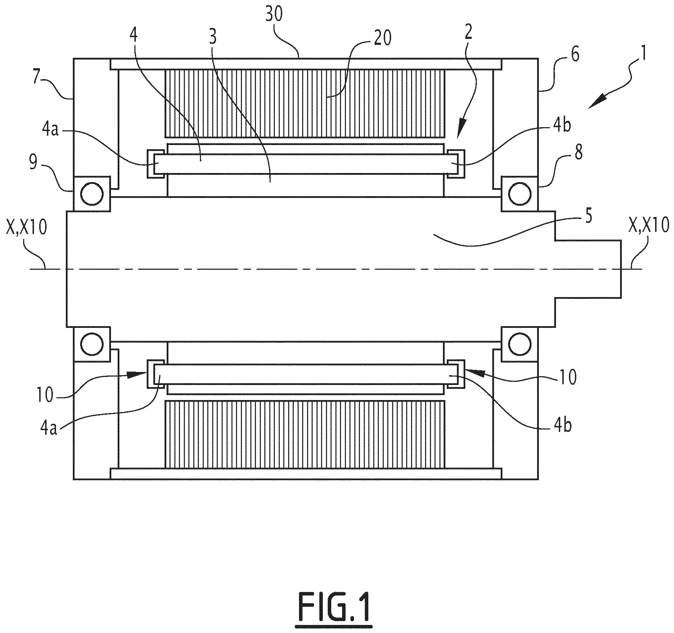

La figure 1 illustre schématiquement un exemple d'un moteur électrique, en particulier en moteur asynchrone de traction ferroviaire, désigné par le numéro de référence 1.

Selon des formes possibles de réalisation bien connues à l'homme du métier et pour cette raison non illustrées ci-dessous en détail, le moteur 1 comprend une carcasse 30 à l'intérieure de laquelle sont assemblés un stator 20, et un rotor 2 comprenant une pile de tôles magnétiques 3 et une pluralité de barres conductrices 4, réalisées par exemple en cuivre ou en aluminium, qui sont insérées dans les tôles magnétiques 3 du rotor 2.

Dans son ensemble, le rotor 2 est monté sur un arbre rotatif 5 tournant autour d'un axe longitudinal de référence X, avec les barres rotoriques 4 agencées longitudinalement, à distance les unes des autres, autour de cet axe longitudinal de référence X.

Comme schématiquement illustré sur la figure 1, le moteur 1 comprend en outre un premier flasque 6, disposé sur le côté de commande du moteur 1, un deuxième flasque 7 opposé au côté de commande, un premier roulement 8 disposé sur le côté de commande, et un deuxième roulement 9 disposé sur le côté opposé au côté de commande.

Les barres conductrices 4 sont reliées entre-elles par deux anneaux de court-circuit 10 afin de former une configuration à cage d'écureuil.

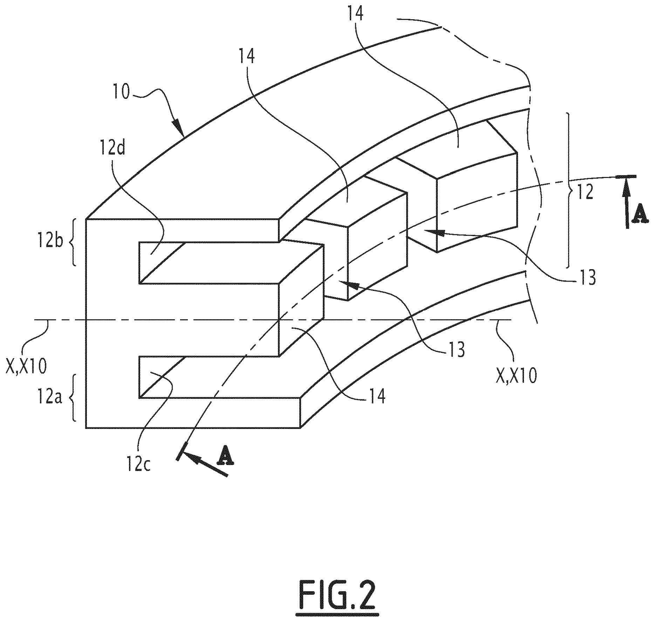

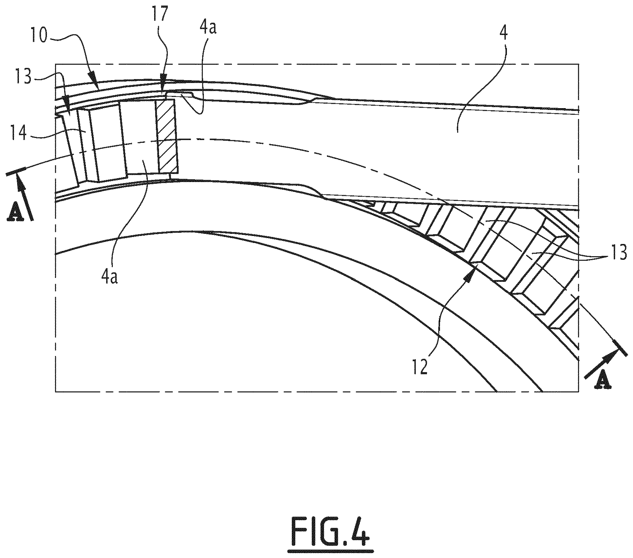

En particulier, les figure 2 et 4 illustrent schématiquement des modes possibles de réalisation d'un anneau de court-circuit désigné par le numéro de référence 10.

L'anneau de court-circuit 10 comporte un corps de forme substantiellement annulaire qui est réalisé en une seule pièce de matériau électriquement conducteur, par exemple en cuivre ou en aluminium, et se développe autour d'un axe longitudinal de référence X10, c'est-à-dire un axe longitudinal substantiellement coïncidant avec l'axe de rotation X de l'arbre rotatif 5 en configuration montée du moteur 1.

En outre, le corps annulaire comprend une face de couplage 12 avec les barres rotoriques 4 qui se développe transversalement par rapport à l'axe longitudinal de référence X, et en particulier selon un plan substantiellement perpendiculaire à l'axe longitudinal de référence X, et comporte une pluralité de niches de logement 13 et une pluralité d'éléments de remplissage 14 prévues selon une séquence alternée sur la même face de couplage 12.

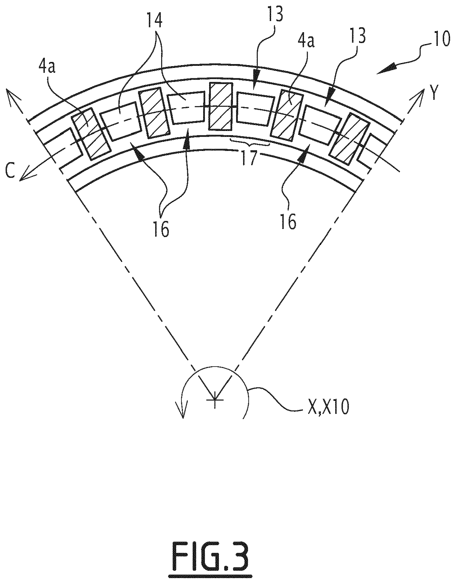

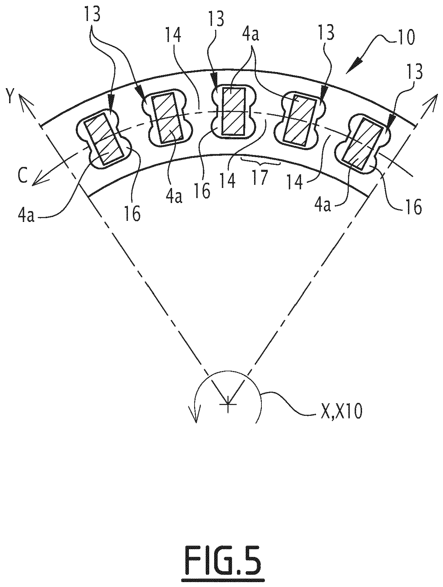

En particulier, comme illustré sur les figures 2 à 6, le niches de logement 13 sont espacées à distance régulière les unes des autres le long de la face de couplage 12 et selon un parcours circonférentiel, indiquée sur les figures 3 et 5 par la flèche C.

Selon une mode possible de réalisation de l'anneau de court-circuit 10, chaque niche de logement 13 s'étend selon une direction substantiellement parallèle à l'axe longitudinal de référence X10 et comporte une paroi de fond 16 fermée et transversale à l'axe longitudinal de référence X10.

De cette façon, chaque niche de logement 13 délimite un espace fermé au fond et destiné à loger, de manière non traversante, une portion d'extrémité 4a d'une barre rotorique 4 correspondante.

En outre, chaque élément de remplissage 14 s'étend entre deux niches de logements 13 adjacentes, en saillie par rapport aux parois de fond 16 fermées correspondantes selon une direction substantiellement parallèle à l'axe longitudinal de référence X et vers le rotor 2 en configuration montée du moteur 1. En particulier, chaque élément de remplissage 14 est configuré pour remplir, au moins partiellement, un espace 17 entre les portions d'extrémité 4a de chaque couple de barres rotoriques adjacentes, une fois que les barres rotoriques 4 sont logées dans les niches de logement 13 correspondantes.

Selon une forme possible de réalisation, chaque niche de logement 13 est creusée dans le corps annulaire et s'étend de la surface supérieure de la face de couplage 12 vers l'intérieur du corps annulaire, jusqu'à la paroi de fond 16 fermée correspondante, selon une direction substantiellement parallèle à l'axe longitudinal de référence X10.

Dans cette forme possible de réalisation, chaque élément de remplissage 14 est formé par une portion pleine de la face de couplage entre deux niches de logement 13 adjacentes.

Selon un mode de réalisation illustré sur les figures 4 et 5, les niches de logement 13, vues dans un plan substantiellement perpendiculaire à l'axe longitudinal de référence X, sont configurées en forme d'os. Par « en forme d'os », on entend que la silhouette des niches de logement 13 présente deux lobes et une partie resserrée entre ces lobes, globalement avec la forme extérieure d'un 8.

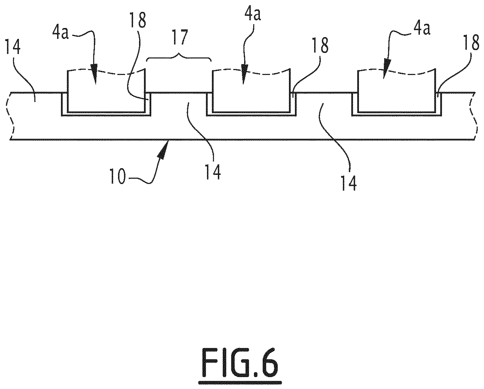

Selon une forme possible de réalisation illustrée sur la figure 6, la face de couplage 12, vue selon une coupe médiane et circonférentielle du corps annulaire, c'est-à-dire selon la ligne circulaire de coupure A-A indiquée sur les figures 2 et 4, présente un profil en forme de dents de scie substantiellement rectangulaires.

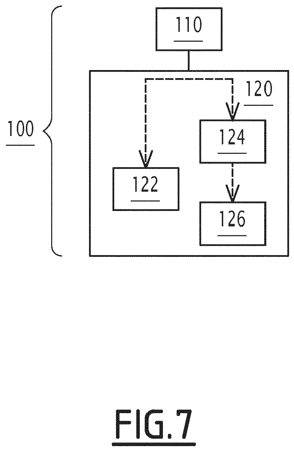

La figure 7 illustre schématiquement un procédé de fabrication d'un anneau de court-circuit 10 selon l'invention, ce procédé étant repéré par le numéro de référence global 100 et comportant au moins les étapes suivantes:
- 110 : réaliser un corps de forme substantiellement annulaire en une seule pièce de matériau électriquement conducteur, qui se développe autour d'un axe longitudinal de référence, c'est-à-dire l'axe longitudinal de référence X10, et comporte une face de couplage 12 avec les barres rotoriques 4 d'un moteur 1, la face de couplage 12 se développant transversalement par rapport à l'axe longitudinal de référence X10 ;
- 120 : réaliser, sur la face de couplage 12 du corps annulaire une pluralité de niches de logement 13 et une pluralité d'éléments de remplissage 14, dans lequel le niches de logement 13 sont espacées à distance régulière les unes des autres selon une direction circonférentielle C le long de la face de couplage 12, et chaque niche de logement 13 s'étend selon une direction substantiellement parallèle à l'axe longitudinal de référence X10 et comporte une paroi de fond 16 fermée, transversale à l'axe longitudinal de référence X10 de façon à loger, de manière non traversante, une portion d'extrémité 4a d'une barre rotorique 4, et dans lequel chaque élément de remplissage 14 s'étend entre deux niches de logements 13 adjacentes, en saillie par rapport aux parois de fond 16 fermées correspondantes et est configuré pour remplir, au moins partiellement, un espace 17 entre les portions d'extrémité 4a de deux barres rotoriques 4 adjacentes, une fois que les barres rotoriques 4 sont logées dans les niches de logement 13 correspondantes.

Selon une mode possible de réalisation du procédé de fabrication 100, l'étape 120 consistant à réaliser la pluralité d'éléments de remplissage 14 et la pluralité de niches de logement 13 comprend au moins la sous-étape suivante :
- 122 : fraiser le corps annulaire en formant les niches de logement 13 creusées à distance régulière les unes des autres et s'étendant de la face de couplage 12 vers l'interne du corps annulaire en direction substantiellement parallèle à l'axe de référence X10, les portions de la face de couplage 12 pleines ou non fraisées entre chaque couple de niches de logement 13 adjacentes formant la pluralité d'éléments de remplissage 14.

En particulier, selon une mode possible de réalisation, la sous-étape 122 consistant à fraiser le corps annulaire en formant les niches de logement 13, comporte le fait de réaliser une pluralité de niches de logement 13 en forme d'os.

Selon un autre mode possible de réalisation, l'étape 120 consistant à réaliser la pluralité d'éléments de remplissage 14 et la pluralité de niches de logement 13 comprend au moins les sous-étapes suivantes :
- 124 : réaliser, le long d'un bord interne 12a et d'un bord externe 12b de la face de couplage 12 et selon une direction circonférentielle, indiquée sur les figures 2 et 4 par la flèche circulaire C, une première rainure 12c et une deuxième rainure 12d correspondante. Les rainures 12c et 12d peuvent être réalisées par fraisage ;
- 126 : fraiser radialement, à des positions prédéfinies, des portions de la face de couplage 12 entre la première rainure 12c et la deuxième rainure 12d, afin de former la pluralité des niches de logements 13 alternées en séquence avec la pluralité d'éléments de remplissage 14, chaque élément de remplissage 14 étant formé par une portion correspondante de la face de couplage 12, pleine ou non fraisée, entre chaque couple de niches de logement 13 adjacentes.

La direction radiale des fraisages est indiquée sur les figures 3 et 5 par la flèche de référence Y qui se trouve dans un plan transversal à l'axe longitudinal de référence X10.

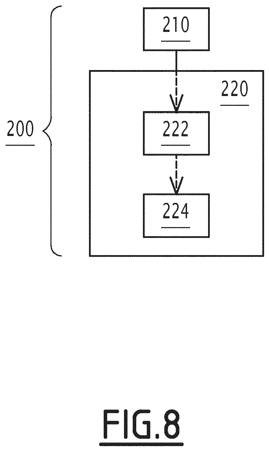

La figure 8 illustre schématiquement un procédé 200 d'assemblage d'un rotor 2 d'un moteur électrique 1, et en particulier des barres rotoriques 4 du rotor 2 à un anneau de court-circuit 10, comportant au moins les étapes suivantes:
- 210 : coupler un anneau de court-circuit 10 illustré ci-dessus, à la pluralité des barres rotoriques 4 du rotor 2 en logeant une portion d'extrémité 4a de chaque barre rotorique 4 dans une niche de logement 13 correspondante de l'anneau de court-circuit 10, avec chaque élément de remplissage 14 qui remplit, au moins partiellement, un espace 17 entre les portions d'extrémité 4a de deux barres rotoriques 4 adjacentes ;
- 220 : solidariser, de manière irréversible, l'anneau de court-circuit 10 à la portion d'extrémité 4a de chaque barre rotorique 4.

En particulier, l'étape 220 consistant à solidariser l'anneau de court-circuit 10 à chaque barre rotorique comprend au moins les sous-étapes suivantes :
- 222 : insérer du matériau d'apport 18 électriquement conducteur dans chaque niche de logement 13 ; et
- 224 : braiser le matériau d'appoint en solidarisant, de manière irréversible, l'anneau de court-circuit 10 à la portion d'extrémité 4a de chaque barre rotorique 4.

La définition de « manière irréversible » doit être ici interprétée comme se référant à la réalisation d'une liaison mécanique entre deux parties qui peuvent séparées après leur solidarisation seulement par moyen d'un procédé comportant la destruction au moins partielle d'une partie ou des deux pièces couplées.

Clairement, un deuxième anneau de court-circuit 10 peut être solidarisé avec les mêmes modalités à la portion d'extrémité opposée 4b de chaque barre rotorique 4.

De cette façon, on réalise un moteur électrique 1, et en particulier un moteur asynchrone pour traction ferroviaire, dans lequel chaque barre rotorique 4 comporte une portion d'extrémité, et non seulement la surface de tête de cette portion d'extrémité, qui est aisément logée dans une niche de logement 13 correspondante et y solidarisée de manière irréversible avec l'anneau de court-circuit 10, au moyen du matériau d'apport 18 électriquement conducteur inséré dans chaque niche de logement 13.

En outre, les éléments de remplissage 14 forment en pratique des bossages structurellement intégrés dans le corps annulaire et, comme illustré par exemple sur la figure 4, chaque élément de remplissage remplit l'espace 17 qui se forme entre les portions d'extrémité de deux barres rotoriques adjacentes une fois que les barres 4 sont logées dans les niches de logement 14 correspondantes.

De cette façon, l'assemblage des barres rotoriques 4 avec l'anneau 10 est plus précis, et l'espace 17 à remplir avec le matériau d'apport 18 est sensiblement réduit par rapport aux solutions de l'art connue.

Il ressort clairement de la description qui précède que le procédé de fabrication 100 selon l'invention permet d'atteindre le but à la base de la présente invention.

En effet, la structure de l'anneau de court-circuit 10 permet de réaliser une liaison mécanique avec les barres conductrices 4 plus simple et précis, induisant une capacité mécanique de reprise des efforts centrifuges qui autorise avantageusement des vitesses linéaires périphériques supérieures par rapport aux solutions de l'art connue.

L'anneau de court-circuit 10, le moteur électrique 1, le procédé de fabrication 100 et le procédé d'assemblage 200 ainsi conçus sont susceptibles de modifications et de variations. Par exemple, la forme des niches de logement 13 ou d'éléments de remplissage 14 peut être configurée de manière différente ; le corps annulaire 12 peut être réalisé en utilisant tout mode d'usinage ou de jonction possible ; certaines étapes ou sous-étapes du procédé 100 ou du procédé 200 peuvent être exécutées selon une séquence différente par rapport à celle décrite ci-dessous et illustrée dans les figures 7 et 8.

Tous les aménagements peuvent en outre être remplacés par des éléments techniquement équivalents.

## Revendications

1. Procédé de fabrication (100) d'un anneau de court-circuit (10) pour un moteur électrique (1) qui comprend un rotor (2) incluant une pluralité de barres rotoriques (4), le procédé de fabrication (100) comportant au moins les étapes suivantes:
- (110) : réaliser un corps de forme substantiellement annulaire en une seule pièce de matériau électriquement conducteur, qui se développe autour d'un axe de référence (X10) et comporte une face de couplage (12) avec les barres rotoriques (4) qui se développe transversalement par rapport à l'axe longitudinal de référence (X10) ;
- (120) : réaliser, sur la face de couplage (12) du corps annulaire une pluralité de niches de logement (13) qui sont espacées à distance régulière les unes des autres selon une direction circonférentielle (C) le long de la face de couplage (12), chaque niche de logement (13) s'étendant selon une direction substantiellement parallèle à l'axe longitudinal de référence (X10) et ayant une paroi de fond (16) fermée transversale à l'axe longitudinal de référence (X10) de façon à loger, de manière non traversante, une portion d'extrémité (4a) d'une barre rotorique (4), et une pluralité d'éléments de remplissage (14), chaque élément de remplissage (14) s'étendant entre deux niches de logements (13) adjacentes, en saillie par rapport aux parois de fond (16) fermées correspondantes et étant configuré pour remplir, au moins partiellement, un espace (17) entre les portions d'extrémité (4a) de deux barres rotoriques (4) adjacentes une fois que les barres rotoriques (4) sont logées dans les niches de logement (13) correspondantes, le procédé de fabrication (100) étant **caractérisé en ce que** l'étape (120) consistant à réaliser la pluralité d'éléments de remplissage (14) et la pluralité de niches de logement (13) comprend les sous-étapes suivantes :
- (122) fraiser le corps annulaire (12) en formant les niches de logement (13) creusées dans le corps annulaire à distance régulière les unes des autres et s'étendant de la face de couplage (12) vers l'intérieur du corps annulaire en direction substantiellement parallèle à l'axe de référence (X10), les portions de la face de couplage (12) pleines ou non fraisées entre chaque couple de niches de logement (13) adjacentes formant la pluralité d'éléments de remplissage (14) ;
- (124) réaliser, selon une direction circonférentielle le long d'un bord interne (12a) et d'un bord externe (12b) de la face de couplage (12) une première rainure (12c) et une deuxième rainure (12d) correspondante ;
- (126) fraiser radialement, à des positions prédéfinies, des portions de la face de couplage (12) entre la première rainure (12c) et la deuxième rainure (12d), afin de former la pluralité des niches de logements (13) alternées en séquence avec des portions de la face de couplage (12) pleines on non fraisées, chaque portion pleine ou non fraisée entre chaque couple de niches de logement (13) adjacentes formant un élément de remplissage (14) correspondant.

## Patentansprüche

1. Verfahren zur Herstellung (100) eines Kurzschlussrings (10) für einen Elektromotor (1), der einen Rotor (2) umfasst, darin eingeschlossen eine Vielzahl von Rotorstangen (4), wobei das Verfahren zur Herstellung (100) mindestens die folgenden Schritte umfasst:
- (110): Erzeugen eines Körpers mit einer im Wesentlichen ringförmigen Form aus einem einzigen elektrisch leitenden Materialstück, das sich um eine Referenzachse (X10) erstreckt und eine Kopplungsfläche (12) mit den Rotorstangen (4) umfasst, die sich quer mit Bezug auf die Referenzlängsachse (X10) erstreckt;
- (120): Erzeugen, auf der Kopplungsfläche (12) des ringförmigen Körpers, einer Vielzahl von Aufnahmenischen (13), die in regelmäßigem Abstand voneinander in einer Umfangsrichtung (C) entlang der Kopplungsfläche (12) beabstandet sind, wobei sich jede Aufnahmenische (13) in einer im Wesentlichen parallelen Richtung zur Referenzlängsachse (X10) erstreckt und eine untere Wand (16) aufweist, die quer zur Referenzlängsachse (X10) geschlossen ist, um auf nicht querende Weise einen Endabschnitt (4a) einer Rotorstange (4) aufzunehmen, und einer Vielzahl von Füllelementen (14), wobei sich jedes Füllelement (14) zwischen zwei benachbarten Aufnahmenischen (13) erstreckt, hervorspringend mit Bezug auf die entsprechenden geschlossenen unteren Wände (16), und konfiguriert, um mindestens teilweise einen Raum (17) zwischen den Endabschnitten (4a) von zwei benachbarten Rotorstangen (4) zu füllen, nachdem die Rotorstangen (4) in den entsprechenden Aufnahmenischen (13) aufgenommen sind, wobei das Verfahren zur Herstellung (100) **dadurch gekennzeichnet ist, dass** der Schritt (120), bestehend aus dem Erzeugen der Vielzahl von Füllelementen (14) und der Vielzahl von Aufnahmenischen (13), die folgenden Unterschritte umfasst:
- (122) Fräsen des ringförmigen Körpers (12) durch Bilden der vertieften Aufnahmenischen (13) in dem ringförmigen Körper in regelmäßigem Abstand voneinander und sich erstreckend von der Kupplungsfläche (12) hin zum Inneren des ringförmigen Körpers in einer im Wesentlichen parallelen Richtung zur Referenzachse (X10), wobei die vollen oder nicht gefrästen Abschnitte der Kopplungsfläche (12) zwischen jedem Paar von benachbarten Aufnahmenischen (13) die Vielzahl von Füllelementen (14) bilden;
- (124) Erzeugen, in einer Umfangsrichtung entlang eines inneren Rands (12a) und eines äußeren Rands (12b) der Kopplungsfläche (12), einer ersten Rille (12c) und einer entsprechenden zweiten Rille (12d);
- (126) Fräsen, radial zu vordefinierten Positionen, von Abschnitten der Kopplungsfläche (12) zwischen der ersten Rille (12c) und der zweiten Rille (12d), um die Vielzahl der Aufnahmenischen (13) alternierend in Sequenz mit vollen oder nicht gefrästen Abschnitten der Kopplungsfläche (12) zu bilden, wobei jeder volle oder nicht gefräste Abschnitt zwischen jedem Paar von benachbarten Aufnahmenischen (13) ein entsprechendes Füllelement (14) bildet.

## Claims

1. A method for manufacturing (100) a short-circuit ring (10) for an electric motor (1) comprising a rotor (2) including a plurality of rotor bars (4), the manufacturing method (100) comprising at least the following steps:
- (110): producing a body of substantially annular shape in a single piece of electrically conductive material, which develops around a reference axis (X10) and comprises a coupling face (12) with the rotor bars (4) which develops transversely with respect to the longitudinal reference axis (X10);
- (120): producing, on the coupling face (12) of the annular body, a plurality of housing recesses (13) which are spaced at regular distances from one another in a circumferential direction (C) along the coupling face (12), each housing recess (13) extending in a direction substantially parallel to the longitudinal reference axis (X10) and having a closed bottom wall (16) transverse to the longitudinal reference axis (X10) so as to house, in a non-through manner, an end portion (4a) of a rotor bar (4), and a plurality of filler elements (14), each filler element (14) extending between two adjacent housing recesses (13), projecting with respect to the corresponding closed bottom walls (16) and being configured to fill, at least partially, a space (17) between the end portions (4a) of two adjacent rotor bars (4) once the rotor bars (4) are housed in the corresponding housing recesses (13), the manufacturing method (100) being **characterized in that** the step (120) consisting in producing the plurality of filler elements (14) and the plurality of housing recesses (13) comprises the following sub-steps:
- (122) milling the annular body (12) by forming the housing recesses (13) hollowed out in the annular body at regular distances from one another and extending from the coupling face (12) toward the inside of the annular body in a direction substantially parallel to the reference axis (X10), the solid or unmilled portions of the coupling face (12) between each pair of adjacent housing recesses (13) forming the plurality of filler elements (14);
- (124) producing, in a circumferential direction along an inner edge (12a) and an outer edge (12b) of the coupling face (12), a corresponding first groove (12c) and second groove (12d);
- (126) radially milling, at predefined positions, portions of the coupling face (12) between the first groove (12c) and the second groove (12d), in order to form the plurality of alternating housing recesses (13) in sequence with solid or unmilled portions of the coupling face (12), each solid or unmilled portion between each pair of adjacent housing recesses (13) forming a corresponding filler element (14).
